# EUROPÄISCHE PATENTSCHRIFT

(11) **EP 3 606 677 B1**
(45) Veröffentlichungstag und Bekanntmachung des Hinweises auf die Patenterteilung: **10.03.2021**
(21) Anmeldenummer: 18714241.9
(22) Anmeldetag: 28.03.2018
(51) Int. Cl.: B06B 1/02, B23K 20/10

(54) **ULTRASCHALLBEARBEITUNGSMASCHINE MIT ZWEI SONOTRODEN UND VERFAHREN ZUM BETREIBEN EINER SOLCHEN**
ULTRASONIC MACHINE TOOL COMPRISING TWO SONOTRODES AND METHOD FOR OPERATING SAME
MACHINE D'USINAGE PAR ULTRASONS ÉQUIPÉE DE DEUX SONOTRODES ET PROCÉDÉ POUR FAIRE FONCTIONNER UNE TELLE MACHINE

(30) Priorität: 03.04.2017 DE 102017107151
(43) Veröffentlichungstag der Anmeldung: 12.02.2020
(73) Patentinhaber: Herrmann Ultraschalltechnik GmbH & Co. KG, 76307 Karlsbad (DE)
(72) Erfinder: GNAD, Gerhard, 75210 Keltern (DE)
(74) Vertreter: WSL Patentanwälte Partnerschaft mbB
(86) Internationale Anmeldenummer: PCT/EP2018/057993
(87) Internationale Veröffentlichungsnummer: WO 2018/184956

(56) Entgegenhaltungen:
- EP-A2- 1 849 531
- WO-A1-01/53821
- WO-A2-2013/017452
- DE-A1-102009 026 952
- DE-A1-102013 104 227
- US-A1- 2009 013 786
- US-A1- 2016 114 494
- US-A1- 2016 368 201

## Beschreibung

Die vorliegende Erfindung betrifft eine Ultraschallbearbeitungsmaschine mit einer ersten Sonotrode mit einer ersten Resonanzfrequenz f₁, und einem ersten Konverter, der mit der ersten Sonotrode verbunden ist. Weiterhin weist die Ultraschallbearbeitungsmaschine einen Generator mit einem Generatorausgang zum Erzeugen einer ersten elektrischen Wechselspannung mit der ersten Frequenz f₁ oder im Wesentlichen mit der ersten Frequenz f₁ und zum Ausgeben der ersten elektrischen Wechselspannung an dem Generatorausgang, auf, wobei der Generatorausgang mit dem ersten Konverter verbunden ist.

Solche Ultraschallbearbeitungsmaschinen sind grundsätzlich z.B. aus Dokument US 2016/114494 A1 bekannt. Diese werden beispielsweise zum Ultraschallschweißen oder Ultraschallschneiden eingesetzt. Dabei ist die Sonotrode mit einer Schweiß- oder Schneidfläche ausgestattet und wird mit einer Ultraschallschwingung beaufschlagt und zum Schweißen oder Schneiden meist auf ein Gegenwerkzeug zugefahren, so dass das zu schweißende oder zu schneidende Material zwischen Sonotrode einerseits und Gegenwerkzeug andererseits geführt wird.

Um die Sonotrode in Schwingung zu versetzen, ist diese gegebenenfalls über einen Amplitudentransformator mit einem Konverter verbunden. Der Konverter wandelt die an ihm anliegende elektrische Wechselspannung in eine mechanische Schwingung um. Der gegebenenfalls zwischengeschaltete Amplitudentransformator ändert die Amplitude, ohne jedoch die Frequenz der Schwingung zu verändern. An dem Konverter ist ein Generator angeschlossen, der eine elektrische Wechselspannung erzeugt. Um eine nennenswerte Energiemenge von der Sonotrode auf das zu bearbeitende Werkstück zu übertragen, ist es notwendig, dass die Ultraschallschwingeinheit, die aus dem Konverter, der Sonotrode und gegebenenfalls dem Amplitudentransformator besteht, mit der für die Schweißung relevanten Resonanzfrequenz angeregt wird, so dass sich innerhalb der Ultraschallschwingeinheit eine stehende Ultraschallwelle ausbildet. Daher wird der Generator auf das Ultraschallschwingsystem angepasst, so dass er die Wechselspannung mit der gewünschten Resonanzfrequenz bereitstellt. In manchen Anwendungsfällen ist es jedoch gewünscht, dass der Generator eine Frequenz erzeugt, die sich in unmittelbarer Nähe zur Resonanzfrequenz der Ultraschallschwingeinheit befindet, jedoch nicht exakt der Resonanzfrequenz entspricht.

Die elektrische Wechselspannung ist daher immer auf die Resonanzfrequenz des Ultraschallschwingsystems bzw. der Sonotrode abgestimmt.

Häufig reicht das Bereitstellen einer einzigen Sonotrode nicht aus, um das Material vollständig zu bearbeiten. Es gibt daher Anwendungsfälle, in denen zwei oder sogar noch mehr Sonotroden im Einsatz sind. In der Regel wird für jede Sonotrode ein eigener Generator zur Verfügung gestellt, der am Generatorausgang das entsprechende elektrische Wechselspannungssignal bereitstellt.

Vereinzelt ist bereits versucht worden, mehr als eine Sonotrode mit einem gemeinsamen Generator zu betreiben. Dabei wurden entweder Sonotroden mit gleicher Resonanzfrequenz verwendet, so dass diese gleichzeitig angeregt werden können, oder der Generatorausgang wurde nacheinander mit den unterschiedlichen Sonotroden verbunden, so dass der Generator zwar mehrere Sonotroden anregen kann, jedoch zu jedem Zeitpunkt immer nur eine Sonotrode angeregt wird.

Im ersten Fall besteht keine Möglichkeit, die Schwingungsamplituden der einzelnen Sonotroden getrennt zu variieren. Im zweiten Fall ist ein gleichzeitiges Betreiben von mehreren Sonotroden mit einem Generator nicht möglich.

Die DE 10 2013 104 227 A1 betrifft eine Ultraschallschweißvorrichtung zur Ultraschallbearbeitung eines Materials mit mindestens zwei Sonotroden. Die WO 01/53821 A1 betrifft ein Verfahren für eine Materialanalyse sowie eine Ultraschall-Materialanalysevorrichtung, mit der ein solches Verfahren durchgeführt wird.

Ausgehend von dem beschriebenen Stand der Technik ist es Aufgabe der vorliegenden Erfindung, eine Ultraschallbearbeitungsmaschine der eingangs genannten Art bereitzustellen, die kostengünstig den Betrieb einer weiteren Sonotrode erlaubt. Es ist weiterhin Aufgabe der vorliegenden Erfindung ein Verfahren zum Betreiben zweier Sonotroden anzugeben.

Hinsichtlich der Ultraschallbearbeitungsmaschine wird diese Aufgabe dadurch gelöst, dass eine zweite Sonotrode mit einer zweiten Resonanzfrequenz f₂ und ein zweiter Konverter, der mit der zweiten Sonotrode verbunden ist, vorgesehen sind, wobei der Generatorausgang auch mit dem zweiten Konverter verbunden ist, und der Generator derart ausgebildet ist, dass er ein Mischsignal erzeugt, welches die erste elektrische Wechselspannung und eine zweite elektrische Wechselspannung mit der zweiten Frequenz f₂ oder im Wesentlichen mit der zweiten Frequenz f₂ aufweist, und das Mischsignal am Generatorausgang ausgibt, und wobei sich die erste Frequenz f₁ und die zweite Frequenz f₂ unterscheiden.

Das erzeugte Mischsignal kann beispielsweise die Summe der ersten elektrischen Wechselspannung und der zweiten elektrischen Wechselspannung sein. Das summierte Mischsignal wird nun beiden Ultraschallschwingeinheiten bestehend jeweils aus einer Sonotrode und einem Konverter zur Verfügung gestellt.

Der Erfindung liegt die Beobachtung zugrunde, dass jedes Ultraschallschwingsystem im Wesentlichen nur elektrische Energie aufnimmt, die in Form einer Wechselspannung mit der geeigneten Frequenz bereitgestellt wird. Der Anteil des Mischsignals, der mit einer Frequenz bereitgestellt wird, die sich von der Resonanzfrequenz der anzuregenden Sonotrode genügend weit unterscheidet, trägt nicht zur Anregung bei.

Das Mischsignal wird somit allen Sonotroden zur Verfügung gestellt, wobei jedoch nur der Teil des Mischsignals mit der geeigneten Resonanzfrequenz zur Anregung beiträgt.

Es ist daher möglich, durch Verändern der Anteile bzw. Amplituden der ersten und der zweiten elektrischen Wechselspannung, die Schwingungsamplitude von erster und zweiter Sonotrode getrennt voneinander zu erhöhen oder zu erniedrigen.

In einer besonders bevorzugten Ausführungsform ist die Differenz zwischen der ersten Frequenz f₁ und der zweiten Frequenz f₂ größer als 300 Hz, vorzugsweise größer als 500 Hz und am besten größer als 1000 Hz.

Wie bereits eingangs erläutert, zeigen Ultraschallschwingungssysteme in der Regel keine scharfe Resonanzfrequenz, so dass es möglich ist, die Sonotrode auch mit einer Wechselspannung anzuregen, deren Frequenz sich etwas von der Resonanzfrequenz unterscheidet.

Um sicherzustellen, dass mit der ersten elektrischen Wechselspannung auch nur die erste Sonotrode und mit der zweiten elektrischen Wechselspannung auch nur die zweite Sonotrode angeregt wird, sollten sich daher die erste Frequenz f₁ und die zweite Frequenz f₂ genügend weit unterscheiden. Zudem kommt es bei der Bearbeitung, d.h. dann, wenn die Sonotrode mit dem zu bearbeitenden Material in Kontakt tritt, zwangsläufig zu einer Veränderung, nämlich meist zu einer Vergrößerung, der Resonanzfrequenz aufgrund der Dämpfung und der Ankopplung an das zu bearbeitende Material. Die Resonanzfrequenzen sind so zu wählen, dass auch bei einer durch die Dämpfung bewirkten Resonanzfrequenzverschiebung bei einer Sonotrode sich die beiden Resonanzfrequenzen noch unterscheiden.

In einer weiteren bevorzugten Ausführungsform ist ein erstes Strommessgerät zum Messen des durch den ersten Konverter fließenden Stroms und ein zweites Strommessgerät zum Messen des durch den zweiten Konverter fließenden Stroms vorgesehen.

Anhand des durch den Konverter fließenden Stroms kann Rückschluss gezogen werden auf die Schwingungsamplitude der Sonotrode. Beispielsweise kann eine Spule parallel zu dem Konverter geschaltet und derart dimensioniert sein, dass diese mit der Kapazität des Konverters bei der Resonanzfrequenz einen Sperrkreis bildet. Dann ist der Strom durch den Konverter für sinusförmige Anregungen proportional zu der Schwingungsamplitude der Sonotrode.

In einer alternativen Ausführungsform kann auf die Spule verzichtet werden, wenn die an den Konverter angelegte Wechselspannung U_{E}(t) und der durch den Konverter fließende Strom I_{E}(t) gemessen und hieraus die Schwingungsamplitude der Sonotrode oder eine mit der Schwingungsamplitude in Relation stehende Feldgröße des elektrischen Schwingsystems bestehend aus dem Generator und dem Konverter berechnet wird.

Dadurch, dass die Schwingungsamplitude aus dem gemessenen Strom und der gemessenen Spannung berechnet wird, kann die Parallelschaltung einer Spule entfallen. Dies führt nicht nur zu einer Vereinfachung des Generators, sondern ermöglicht es auch, dass der Generator für unterschiedliche Ultraschallschwingsysteme, die mit unterschiedlichen Eigenfrequenzen angeregt werden sollen, verwendet werden kann. Bei den bekannten Generatoren ist nur eine sehr begrenzte Einstellbarkeit der Anregungsfrequenz möglich, da die Anregungsfrequenz immer in etwa mit der Resonanzfrequenz des von der parallel geschalteten Spule und der Konverterkapazität gebildeten Schwingkreises übereinstimmen muss.

Diese Beschränkung entfällt bei dem beschriebenen Verfahren, da die Schwingungsamplitude der Sonotrode nun berechnet wird. Dieses Verfahren ist im Detail beschrieben in der WO2013/017452, deren Inhalt durch Bezugnahme aufgenommen wird.

Besonders bevorzugt ist ein erster Regler vorgesehen, welcher auf Basis des durch den ersten Konverter fließenden Stroms die IST-Schwingungsamplitude der ersten Sonotrode bestimmt und bei einer Abweichung zwischen der bestimmten IST-Schwingungsamplitude und einer vorbestimmten SOLL-Schwingungsamplitude die Amplitude der ersten elektrischen Wechselspannung verändert, wobei besonders bevorzugt auch ein zweiter Regler vorgesehen ist, welcher auf Basis des durch den zweiten Konverter fließenden Stroms die IST-Schwingungsamplitude der zweiten Sonotrode bestimmt und bei einer Abweichung zwischen der bestimmten IST-Schwingungsamplitude und einer vorbestimmten SOLL-Schwingungsamplitude die Amplitude der zweiten elektrischen Wechselspannung verändert.

Durch diese Maßnahme kann die Schwingungsamplitude jedes Ultraschallschwingsystems unabhängig von den Schwingungsamplituden der anderen Sonotrode geregelt werden.

Die vorliegende Erfindung betrifft ebenso ein Verfahren zum gleichzeitigen Betreiben einer ersten Ultraschallschwingeinheit bestehend aus einem ersten Konverter und einer ersten Sonotrode mit einer Resonanzfrequenz f₁ und einer zweiten Ultraschallschwingeinheit bestehend aus einem zweiten Konverter und einer zweiten Sonotrode mit einer Resonanzfrequenz f₂.

Die eingangs genannte Aufgabe wird gelöst durch die Schritte:
a) Bereitstellen der ersten und der zweiten Ultraschallschwingeinheit,
b) Bereitstellen eines Generators mit einem Generatorausgang,
c) Verbinden des Generatorausgangs mit einem Signaleingang des ersten Konverters und mit einem Signaleingang des zweiten Konverters,
d) Erzeugen eines Mischsignals bestehend aus einer ersten elektrischen Wechselspannung mit der ersten Frequenz f₁ oder mit im Wesentlichen der ersten Frequenz f₁ und einer zweiten elektrischen Wechselspannung mit der zweiten Frequenz f₂ oder mit im Wesentlichen der zweiten Frequenz f₂,
e) Ausgeben des Mischsignals am Generatorausgang.

Vorzugsweise wird die zweite Resonanzfrequenz f₂ um mindestens 1%, besser um mindestens 2% größer als die erste Resonanzfrequenz f₁ gewählt. Alternativ kann die zweite Resonanzfrequenz f₂ um mindestens 200 Hz, besser um mindestens 400 Hz größer als die erste Resonanzfrequenz f₁ gewählt sein.

Das Mischsignal ist vorzugsweise die Summe aus der ersten elektrischen Wechselspannung und der zweiten elektrischen Wechselspannung.

In einer bevorzugten Ausführungsform wird der Strom I₁ durch den ersten Konverter und/oder der Strom I₂ durch den zweiten Konverter gemessen.

Des Weiteren kann die IST-Schwingungsamplitude der ersten Sonotrode aus dem Strom I₁ durch den ersten Konverter und der Amplitude U₁ der ersten elektrischen Wechselspannung berechnet werden. Vorzugsweise wird die IST-Schwingungsamplitude der zweiten Sonotrode aus dem Strom I₂ durch den zweiten Konverter und der Amplitude U₂ der zweiten elektrischen Wechselspannung berechnet.

Vorzugsweise wird die Schwingungsamplitude der ersten Sonotrode geregelt, wobei die erste Amplitude U₁ der ersten Wechselspannung als Stellgröße verwendet wird, wobei vorzugsweise auch die Schwingungsamplitude der zweiten Sonotrode geregelt wird, wobei die zweite Amplitude U₂ der zweiten Wechselspannung hierfür als Stellgröße verwendet wird.

Weitere Vorteile, Merkmale und Anwendungsmöglichkeiten der vorliegenden Erfindung werden deutlich anhand der folgenden Beschreibung einer bevorzugten Ausführungsform sowie der zugehörigen Figur. Es zeigt:

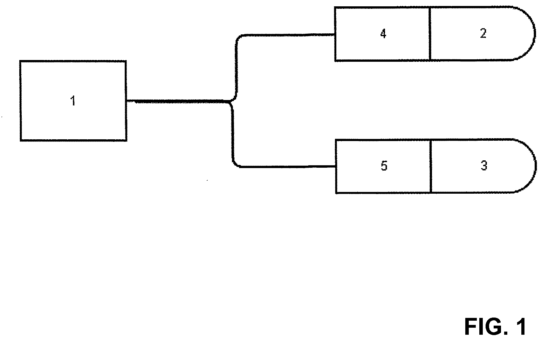

- Figur 1: eine schematische Darstellung einer bevorzugten Ausführungsform der Erfindung.

In Figur 1 ist eine schematische Darstellung einer Ultraschallbearbeitungsmaschine gezeigt. Die Ultraschallbearbeitungsmaschine weist eine erste Sonotrode 2 und eine zweite Sonotrode 3 auf.

Die erste Sonotrode 2 ist mit einem ersten Konverter 4 verbunden. Zwischen erster Sonotrode 2 und erstem Konverter 4 könnte ein Amplitudentransformator angeordnet sein. Der Konverter 4 wandelt die an seinem Eingang anliegende elektrische Wechselspannung in eine mechanische Schwingung um. Das Ultraschallschwingsystem bestehend aus der ersten Sonotrode 2 und dem ersten Konverter 4 weist eine erste Resonanzfrequenz auf. Liegt an dem Eingang des Konverters 4 eine elektrische Wechselspannung mit der Resonanzfrequenz oder einer Frequenz, die sich geringfügig von der Resonanzfrequenz unterscheidet an, so wird die erste Ultraschallschwingeinheit in Schwingung versetzt und die Sonotrode 2 kann zum Bearbeiten eines Materials verwendet werden.

Die zweite Sonotrode 3 ist mit einem zweiten Konverter 5 verbunden. Die erste Ultraschallschwingeinheit mit der ersten Sonotrode 2 und dem ersten Konverter 4 ist genauso aufgebaut, wie die zweite Ultraschallschwingeinheit bestehend aus der zweiten Sonotrode 3 und dem zweiten Konverter 5, wobei sich die Resonanzfrequenzen der beiden Ultraschallschwingsysteme unterscheiden.

Des Weiteren ist ein Generator 1 vorgesehen, der an einem Ausgang ein Signal bereitstellt, das sowohl mit dem ersten Konverter 4 als auch mit dem zweiten Konverter 5 verbunden ist.

Der Generator 1 erzeugt eine Mischfrequenz, die sich aus der Summe der einzelnen elektrischen Wechselspannungen für die einzelnen Ultraschallschwingsysteme zusammensetzt. Im gezeigten Beispiel ist daher die Mischfrequenz die Summe aus der ersten elektrischen Wechselspannung zum Antrieb der ersten Sonotrode 2 und der zweiten elektrischen Wechselspannung zur Anregung der zweiten Sonotrode 3.

Die vom Generator 1 erzeugte Mischfrequenz wird einer im Generator integrierten Leistungsstufe zugeführt. Die Leistungsstufe kann eine digitale Leistungsstufe sein, die die entsprechende Mischfrequenz ausgibt und den beiden Konvertern 4 und 5 zuführt.

Die hochfrequenten Ströme werden mittels sogenannten Strommessgeräten gemessen. Aus den gemessenen Strömen kann über ein Rechenverfahren die Amplitude des angeschlossenen Systems ermittelt werden. Die derart ermittelten IST-Amplituden werden je einem Regler zugeführt und die Frequenz und/oder die Spannung entsprechend geregelt. Das entsprechende Rechenverfahren ist beispielsweise beschrieben in der WO 2013/017452.

### Bezugszeichenliste

- 1: Generator
- 2, 3: Sonotrode
- 4, 5: Konverter

## Patentansprüche

1. Ultraschallbearbeitungsmaschine mit einer ersten Sonotrode (2) mit einer ersten Resonanzfrequenz f₁, einem ersten Konverter (4), der mit der ersten Sonotrode (2) verbunden ist, und einem Generator (1) mit einem Generatorausgang zum Erzeugen einer ersten elektrischen Wechselspannung mit der ersten Frequenz f₁ oder im Wesentlichen mit der ersten Frequenz f₁ und zum Ausgeben der ersten elektrischen Wechselspannung an dem Generatorausgang, wobei der Generatorausgang mit dem ersten Konverter (4) verbunden ist, **dadurch gekennzeichnet, dass** eine zweite Sonotrode (3) mit einer zweiten Resonanzfrequenz f₂ und ein zweiter Konverter (5), der mit der zweiten Sonotrode (3) verbunden ist, vorgesehen sind, wobei der Generatorausgang mit dem zweiten Konverter (5) verbunden ist, und der Generator (1) derart ausgebildet ist, um ein Mischsignal zu erzeugen, welches die erste elektrische Wechselspannung und eine zweite elektrische Wechselspannung mit der zweiten Frequenz f₂ oder im Wesentlichen mit der zweiten Frequenz f₂ aufweist, und das Mischsignal am Generatorausgang auszugeben, und wobei sich die erste Frequenz f₁ und die zweite Frequenz f₂ unterscheiden.

2. Ultraschallbearbeitungsmaschine nach Anspruch 1, **dadurch gekennzeichnet, dass** die Differenz zwischen der ersten Frequenz f₁ und der zweiten Frequenz f₂ größer als 300 Hz, vorzugsweise größer als 500 Hz und am besten größer als 1000 Hz ist.

3. Ultraschallbearbeitungsmaschine nach Anspruch 1 oder 2, **dadurch gekennzeichnet, dass** ein erstes Strommessgerät zum Messen des durch den ersten Konverter (4) fließenden Stroms und eine zweites Strommessgerät zum Messen des durch den zweiten Konverter (5) fließenden Stroms vorgesehen ist.

4. Ultraschallbearbeitungsmaschine nach Anspruch 3, **dadurch gekennzeichnet, dass** ein erster Regler vorgesehen ist, welcher auf Basis des durch den ersten Konverter (4) fließenden Stroms die IST-Schwingungsamplitude der ersten Sonotrode (2) bestimmt und bei einer Abweichung zwischen der bestimmten IST-Schwingungsamplitude und einer vorbestimmten SOLL-Schwingungsamplitude die Amplitude der ersten elektrischen Wechselspannung verändert, wobei vorzugsweise ein zweiter Regler vorgesehen ist, welcher auf Basis des durch den zweiten Konverter (5) fließenden Stroms die IST-Schwingungsamplitude der zweiten Sonotrode (3) bestimmt und bei einer Abweichung zwischen der bestimmten IST-Schwingungsamplitude und einer vorbestimmten SOLL-Schwingungsamplitude die Amplitude der zweiten elektrischen Wechselspannung verändert.

5. Verfahren zum gleichzeitigen Betreiben einer ersten Ultraschallschwingeinheit bestehend aus einem ersten Konverter (4) und einer ersten Sonotrode (2) mit einer Resonanzfrequenz f₁ und einer zweiten Ultraschallschwingeinheit bestehend aus einem zweiten Konverter (5) und einer zweiten Sonotrode (3) mit einer Resonanzfrequenz f₂, **gekennzeichnet durch** die Schritte:
a) Bereitstellen der ersten und der zweiten Ultraschallschwingeinheit,
b) Bereitstellen eines Generators (1) mit einem Generatorausgang,
c) Verbinden des Generatorausgangs mit einem Signaleingang des ersten Konverters (4) und mit einem Signaleingang des zweiten Konverters (5),
d) Erzeugen eines Mischsignales bestehend aus einer ersten elektrischen Wechselspannung mit der ersten Frequenz f₁ oder mit im Wesentlichen der ersten Frequenz f₁ und einer zweiten elektrischen Wechselspannung mit der zweiten Frequenz f₂ oder mit im Wesentlichen der zweiten Frequenz f₂
wobei sich die erste Frequenz f₁ und die zweite Frequenz f₂ unterscheiden,
e) Ausgeben des Mischsignales am Generatorausgang.

6. Verfahren nach Anspruch 5, **dadurch gekennzeichnet, dass** die zweite Resonanzfrequenz f₂ um mindestens 1%, vorzugsweise um mindestens 2% größer als die erste Resonanzfrequenz f₁ gewählt wird.

7. Verfahren nach Anspruch 5 oder 6, **dadurch gekennzeichnet, dass** das das Mischsignal die Summe aus der ersten elektrischen Wechselspannung und der zweiten elektrischen Wechselspannung ist.

8. Verfahren nach Anspruch 7, **dadurch gekennzeichnet, dass** der Strom I₁ durch den ersten Konverter (4) und/oder der Strom I₂ durch den zweiten Konverter (5) gemessen wird.

9. Verfahren nach Anspruch 8, **dadurch gekennzeichnet, dass** die IST-Schwingungsamplitude der ersten Sonotrode (2) aus dem Strom I₁ durch den ersten Konverter (4) und der Amplitude U₁ der ersten elektrischen Wechselspannung berechnet wird, wobei vorzugsweise auch die IST-Schwingungsamplitude der zweiten Sonotrode (3) aus dem Strom I₂ durch den ersten Konverter (4) und der Amplitude U₂ der ersten elektrischen Wechselspannung berechnet wird.

10. Verfahren nach Anspruch 9, **dadurch gekennzeichnet, dass** die Schwingungsamplitude der ersten Sonotrode (2) geregelt wird, wobei die erste Amplitude U₁ der ersten Wechselspannung als Stellgröße verwendet wird, wobei vorzugsweise auch die Schwingungsamplitude der zweiten Sonotrode (3) geregelt wird, wobei die zweite Amplitude U₂ der zweiten Wechselspannung als Stellgröße verwendet wird.

## Claims

1. Ultrasonic machine tool comprising a first sonotrode (2) with a first resonant frequency f₁, a first converter (4), which is connected to the first sonotrode (2), and a generator (1) with a generator output for generating a first electrical alternating voltage with the first frequency f₁ or substantially with the first frequency f₁ and for outputting the first electrical alternating voltage at the generator output, wherein the generator output is connected to the first converter (4), **characterized in that** a second sonotrode (3) with a second resonant frequency f₂ and a second converter (5), which is connected to the second sonotrode (3), are provided, wherein the generator output is connected to the second converter (5), and the generator (1) is formed so as to generate a mixed signal which has the first electrical alternating voltage and a second electrical alternating voltage with the second frequency f₂ or substantially with the second frequency f₂, and to output the mixed signal at the generator output, and wherein the first frequency f₁ and the second frequency f₂ differ from one another.

2. Ultrasonic machine tool according to claim 1, **characterized in that** the difference between the first frequency f₁ and the second frequency f₂ is greater than 300 Hz, preferably greater than 500 Hz and ideally greater than 1000 Hz.

3. Ultrasonic machine tool according to claim 1 or 2, **characterized in that** a first ammeter is provided for measuring the current flowing through the first converter (4) and a second ammeter is provided for measuring the current flowing through the second converter (5).

4. Ultrasonic machine tool according to claim 3, **characterized in that** a first controller is provided which, on the basis of the current flowing through the first converter (4), determines the ACTUAL vibration amplitude of the first sonotrode (2) and, in the case of a difference between the ACTUAL vibration amplitude determined and a predetermined TARGET vibration amplitude, changes the amplitude of the first electrical alternating voltage, wherein a second controller is preferably provided which, on the basis of the current flowing through the second converter (5), determines the ACTUAL vibration amplitude of the second sonotrode (3) and, in the case of a difference between the ACTUAL vibration amplitude determined and a predetermined TARGET vibration amplitude, changes the amplitude of the second electrical alternating voltage.

5. Method for simultaneously operating a first ultrasonic vibration unit consisting of a first converter (4) and a first sonotrode (2) with a resonant frequency f₁ and a second ultrasonic vibration unit consisting of a second converter (5) and a second sonotrode (3) with a resonant frequency f₂, **characterized by** the steps:
a) providing the first and second ultrasonic vibration units,
b) providing a generator (1) with a generator output,
c) connecting the generator output to a signal input of the first converter (4) and to a signal input of the second converter (5),
d) generating a mixed signal consisting of a first electrical alternating voltage with the first frequency f₁ or with substantially the first frequency f₁ and a second electrical alternating voltage with the second frequency f₂ or with substantially the second frequency f₂,
wherein the first frequency f₁ and the second frequency f₂ differ from one another,
e) outputting the mixed signal at the generator output.

6. Method according to claim 5, **characterized in that** the second resonant frequency f₂ is selected at least 1%, preferably at least 2% greater than the first resonant frequency f₁.

7. Method according to claim 5 or 6, **characterized in that** the mixed signal is the sum of the first electrical alternating voltage and the second electrical alternating voltage.

8. Method according to claim 7, **characterized in that** the current I₁ through the first converter (4) and/or the current I₂ through the second converter (5) is measured.

9. Method according to claim 8, **characterized in that** the ACTUAL vibration amplitude of the first sonotrode (2) is calculated from the current I₁ through the first converter (4) and the amplitude U₁ of the first electrical alternating voltage, wherein the ACTUAL vibration amplitude of the second sonotrode (3) is preferably also calculated from the current I₂ through the first converter (4) and the amplitude U₂ of the first electrical alternating voltage.

10. Method according to claim 9, **characterized in that** the vibration amplitude of the first sonotrode (2) is controlled, wherein the first amplitude U₁ of the first alternating voltage is used as control variable, wherein the vibration amplitude of the second sonotrode (3) is preferably also controlled, wherein the second amplitude U₂ of the second alternating voltage is used as control variable.

## Revendications

1. Machine d'usinage par ultrasons comprenant une première sonotrode (2) présentant une première fréquence de résonance f₁, un premier convertisseur (4) qui est relié à la première sonotrode (2), et un générateur (1) comprenant une sortie de générateur pour générer une première tension électrique alternative présentant la première fréquence f₁ ou essentiellement la première fréquence f₁ et pour délivrer la première tension électrique alternative à la sortie de générateur, la sortie de générateur étant reliée au premier convertisseur (4), **caractérisée en ce qu'**une seconde sonotrode (3) présentant une seconde fréquence de résonance f₂ et un second convertisseur (5) qui est relié à la seconde sonotrode (3) sont prévus, la sortie de générateur étant reliée au second convertisseur (5), et le générateur (1) étant conçu pour générer un signal mixte, qui présente la première tension électrique alternative et une seconde tension électrique alternative présentant la seconde fréquence f₂ ou sensiblement la seconde fréquence f₂, et pour délivrer le signal mixte à la sortie de générateur, et la première fréquence f₁ étant différente de la seconde fréquence f₂.

2. Machine d'usinage par ultrasons selon la revendication 1, **caractérisée en ce que** la différence entre la première fréquence f₁ et la seconde fréquence f₂ est supérieure à 300 Hz, de préférence supérieure à 500 Hz, et le mieux supérieure à 1 000 Hz.

3. Machine d'usinage par ultrasons selon la revendication 1 ou 2, **caractérisée en ce qu'**un premier ampèremètre pour mesurer le courant circulant à travers le premier convertisseur (4) et un second ampèremètre pour mesurer le courant circulant à travers le second convertisseur (5) sont prévus.

4. Machine d'usinage par ultrasons selon la revendication 3, **caractérisée en ce qu'**un premier régulateur est prévu, lequel détermine, sur la base du courant circulant à travers le premier convertisseur (4), l'amplitude d'oscillation RÉELLE de la première sonotrode (2) et, en cas d'écart entre l'amplitude d'oscillation RÉELLE déterminée et une amplitude d'oscillation CIBLE prédéterminée, change l'amplitude de la première tension électrique alternative, un second régulateur étant de préférence prévu, lequel détermine, sur la base du courant circulant à travers le second convertisseur (5), l'amplitude d'oscillation RÉELLE de la seconde sonotrode (3) et, en cas d'écart entre l'amplitude d'oscillation RÉELLE déterminée et une amplitude d'oscillation CIBLE prédéterminée, change l'amplitude de la seconde tension électrique alternative.

5. Procédé pour le fonctionnement simultané d'une première unité d'oscillation par ultrasons constituée d'un premier convertisseur (4) et d'une première sonotrode (2) présentant une fréquence de résonance f₁ et d'une seconde unité d'oscillation par ultrasons constituée d'un second convertisseur (5) et d'une seconde sonotrode (3) présentant une fréquence de résonance f₂, **caractérisé par** les étapes consistant à :
a) fournir les première et seconde unités d'oscillation par ultrasons,
b) fournir un générateur (1) présentant une sortie de générateur,
c) relier la sortie de générateur à une entrée de signal du premier convertisseur (4) et à une entrée de signal du second convertisseur (5),
d) générer un signal mixte constitué d'une première tension électrique alternative présentant la première fréquence fi ou sensiblement la première fréquence f₁ et d'une seconde tension électrique alternative présentant la seconde fréquence f₂ ou sensiblement la seconde fréquence f₂,
la première fréquence f₁ étant différente de la seconde fréquence f₂,
e) délivrer le signal mixte à la sortie de générateur.

6. Procédé selon la revendication 5, **caractérisé en ce que** la seconde fréquence de résonance f₂ est choisie au moins 1 %, de préférence au moins 2 % supérieure à la première fréquence de résonance f₁.

7. Procédé selon la revendication 5 ou 6, **caractérisé en ce que** le signal mixte est la somme de la première tension électrique alternative et de la seconde tension électrique alternative.

8. Procédé selon la revendication 7, **caractérisé en ce que** le courant I₁ à travers le premier convertisseur (4) et/ou le courant I₂ à travers le second convertisseur (5) est/sont mesuré(s).

9. Procédé selon la revendication 8, **caractérisé en ce que** l'amplitude d'oscillation RÉELLE de la première sonotrode (2) est calculée à partir du courant I₁ à travers le premier convertisseur (4) et de l'amplitude U₁ de la première tension alternative électrique, l'amplitude d'oscillation RÉELLE de la seconde sonotrode (3) étant de préférence également calculée à partir du courant I₂ à travers le premier convertisseur (4) et de l'amplitude Uz de la première tension électrique alternative.

10. Procédé selon la revendication 9, **caractérisé en ce que** l'amplitude d'oscillation de la première sonotrode (2) est régulée, la première amplitude U₁ de la première tension alternative étantutilisée en tant que grandeur de réglage, l'amplitude d'oscillation de la seconde sonotrode (3) étant de préférence également régulée, la seconde amplitude U₂ de la seconde tension alternative étant utilisée en tant que grandeur de réglage.
